Europäisches Patentamt

European Patent Office

Office européen des brevets

(11) Publication number : **0 490 846 A1**

## (12) EUROPEAN PATENT APPLICATION

(21) Application number : **91850274.1**

(22) Date of filing : **07.11.91**

(51) Int. Cl.⁵ : **B01F 7/00, H02K 5/10**

(30) Priority : **13.12.90 SE 9003983**

(43) Date of publication of application :
**17.06.92 Bulletin 92/25**

(84) Designated Contracting States :
**DE FR IT**

(71) Applicant : **ITT FLYGT AB**
**Box 1309**
**S-171 25 Solna (SE)**

(72) Inventor : **Fries, Hjalmar**
**Dr Robertssons väg 24**
**163 58 Spanga (SE)**

(74) Representative : **Larsson, Sten**
**ITT FLYGT AB Box 1309**
**S-171 25 Solna (SE)**

(54) **Submersible machine.**

(57)    The invention concerns a submersible machine such as a pump or a mixer.

The machine comprises an electric motor and a hydraulic part connected by a driving shaft and is designed with a double-wall enclosure which is connected to a pressurized air source so that an inner over pressure is obtained which is higher than the pressure surrounding the machine.

EP 0 490 846 A1

The invention concerns a submersible machine such as an electrically driven submersible mixer.

A machine of this type comprises an enclosed electric motor which via a rotary shaft and possibly a gear box drives a propeller which obtains mixing of the surrounding medium. The shaft is normally supported by two ball bearings one on each side of the rotor and is sealed on its way towards the propeller by help of one or several seals which prevent the surrounding medium from entering the motor along the shaft. A mixer of this type is shown in the Swedish Design Registration 33 623.

The surrounding medium, which often may be highly pressurized, must thus be prevented from entering the electric motor and damage it. Entering along the shaft is normally prevented by help of a seal arrangement comprising two mechanical seals and an intermediate oil room. The oil being used for lubricating and cooling the seal surfaces and also secures that at least the mechanical seal heading the motor operates in a good environment. This works very well as long as the oil is clean. However, the leakage that always occurs means that the oil is diluted with surrounding medium, normally water. In order to secure good conditions for the inner seal the quality of the oil must be checked at even intervals.

Also other parts of the enclosure might leak at high pressures. This concerns joints and inlets which must occur.

According to invention a device has been obtained which almost entirely eliminates the risk for leakage and therefore extends the time between each necessary service occasion. The characterizing parts of the invention are stated in the claims.

The invention is more closely described below with reference to the enclosed drawing. The machine is here referred to as a mixer, but also other machines such as pumps and turbines are embodied by the invention.

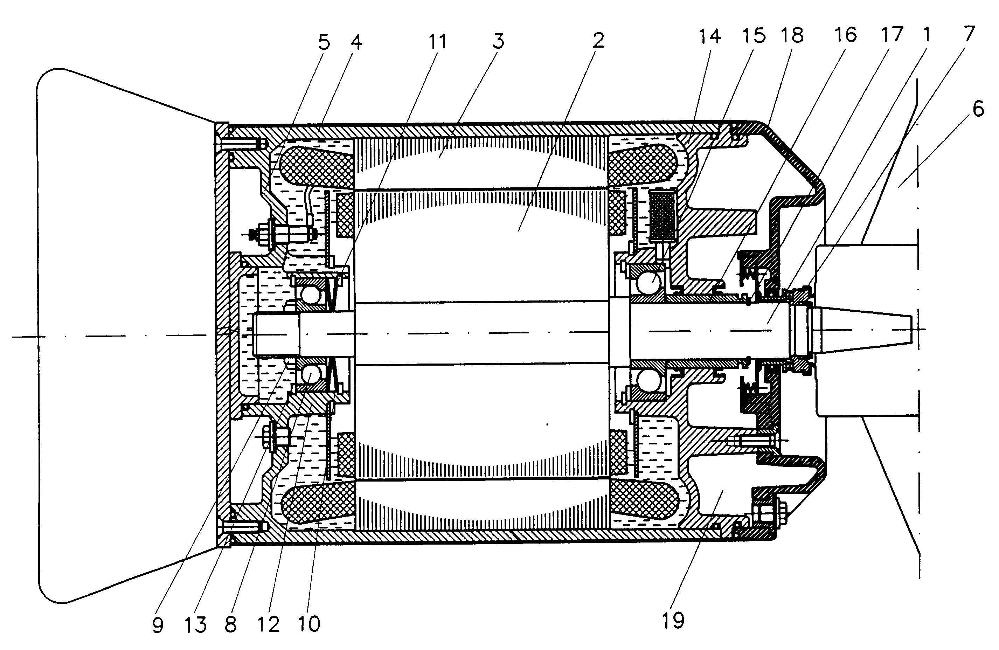

In the drawing 1 stands for a rotary shaft connected to the rotor 2 of an electric motor. The stator 3 is in its turn surrounded by a stator casing formed with a cylindric part 4 and a gable 5. 6 stands for a propeller attached to the shaft 1 and 7 an intermediate seal device. 8 stands for a bearing, 9 a locking nut. 10 spring means, 11 a lock ring, 12 a cup-formed part of the gable 5 and 13 a seal formed like a lock ring in the gable. 14 stands for a bearing support for a second bearing 15, 16 a socket, 17 a lock ring, 18 a gable cap and 19 a seal room.

The mixer comprises an electric motor, a propeller, a connecting driving shaft and a seal means between the motor and the propeller. The motor is surrounded by a protective water proof enclosure comprising a cylindric part and two gable parts. One of the latter parts is provided with a connection box to which an electric cable is connected.

Pressurized air is brought to the connection box, preferably directly through the cable. The connection box is in a suitable way connected to the narrow space between the stator housing and the enclosure and to the oil room. The latter in its turn being in connection with the seals.

According to the invention is thus obtained a pressurized enclosure around the driving unit, partly as an air column around the circumference and one of the gables, partly as a pressurized oil room. The pressure is obtained from a non-shown air pressure source and is preferably fed through the electric cable, thus omitting the need for any additional conduit. By choosing a pressure that exceeds that of the surroundings the risk for leakage is eliminated. This means that the intervals between services may be extended which saves costs.

If a leakage should occur, this will immediately show as an increase of the amount of pressurized air. A simple flowmeter may be used which initiates an alarm.

If the machine operates in surroundings where there is explosion risks, the pressurized air may be replaced by pressurized nitrogen or some other inert gas. This also eliminates the demand for a special explosion proof version of the machine.

## Claims

1 A submersible machine such as a pump or a mixer, comprising an enclosed electric motor, a rotating impeller or propeller and a connecting driving shaft there between characterized in that the enclosure of the electric motor at least partly is of a two-wall design and connected to a source for pressurized air or another pressurized gas which gives an inner overpressure exceeding the pressure of the surroundings.

2 A submersible machine according to claim 1, characterized in that the pressurized gas is fed through the electric cable to the motor.

## EUROPEAN SEARCH REPORT

**European Patent Office**

Application Number

EP 91 85 0274

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 142 167 (BROWN, BOVERY) --- | 1 | B01F7/00 H02K5/10 |
| A | DE-C-956 327 (SIEMENS-SCHUCKERTWERKE) --- | 1 | |
| A | FR-A-2 514 605 (DEGONTAINE) * page 8, line 28 - page 9, line 10; figure 5 * --- | 1 | |
| A | DE-A-1 557 076 (GUSS- UND STAHL-VEREDLUNG) * figures * --- | 2 | |
| A | PATENT ABSTRACTS OF JAPAN vol. 6, no. 32 (E-96)(910) 26 February 1982 & JP-A-56 150 943 ( MITSUBISHI ) * abstract * --- | 1 | |
| A | PATENT ABSTRACTS OF JAPAN vol. 13, no. 63 (C-568)(3411) 13 February 1989 & JP-A-63 256 194 ( SHIN MEIWA ) * abstract * --- | 1 | |
| A | US-A-2 829 286 (BRITZ) --- | | TECHNICAL FIELDS SEARCHED (Int. Cl.5) |
| A | US-A-2 965 364 (PARKER) ----- | | B01F H02K |

The present search report has been drawn up for all claims

| Place of search | Date of completion of the search | Examiner |
|---|---|---|
| THE HAGUE | 10 MARCH 1992 | PEETERS S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)